# EUROPEAN PATENT APPLICATION

(11) **EP 0 875 629 A2**
(43) Date of publication of application: **04.11.1998**
(21) Application number: 98303240.0
(22) Date of filing: 27.04.1998
(51) Int. Cl.: E02D 3/026, B62D 25/08

(54) **Compactor vehicle with axle guard**

(30) Priority: 29.04.1997 GB 9708719
(71) Applicant: SHANKS & McEWAN (SOUTHERN WASTE SERVICES) LIMITED, Milton Keynes, Bucks. MK17 8TA (GB)
(72) Inventor: Griffiths, Emlyn, Pontadawe, West Glamorgan, SA8 3DY (GB); Griffiths, Gareth William, Pontadawe, West Glamorgan, SA8 3DS (GB)
(74) Representative: Dawson, Elizabeth Ann

(57) **Abstract**

A waste compactor or similar earth moving vehicle is provided with an axle guard (21,22) for each wheel (13,14) to prevent the ingress of earth or debris in the space between the wheel (13,14) and the vehicle chassis (11). The axle guard (21,22) overlaps its associated wheel (13,14) and is designed to closely follow the wheel contours with a minimum radial clearance.

## Description

The present invention relates to earth moving vehicles. waste compactor vehicles and other types of heavy vehicle whose wheels are designed to compress or disturb the soil or other material over which they move. Such vehicles are hereinafter collectively referred to as "compactor vehicles".

The invention was originally designed as a waste compactor vehicle for use on land fill sites but it is equally applicable to other types of compactor vehicle. A typical compactor vehicle has a cab in which the driver sits, a front blade assembly for shifting waste or soil, and large metal toothed wheels whose purpose is to compact the material over which the vehicle travels.

The vehicle typically has four wheels mounted at opposite ends of two axles. The front axle is usually fixed to the chassis such that it can only rotate about its own axis. The rear axle is rotatable with respect to the chassis and can also pivot with respect to the chassis to give the vehicle a degree of suspension. A problem with these vehicles is that debris is inclined to collect in the region between the wheels and the chassis and frequently becomes entangled with the vehicle axles. The removal of such debris is extremely time consuming. The presence of debris in the axle region can hinder the operation of the vehicle and some types of refuse can cause extreme damage.

There have been some prior attempts to solve this problem. Sometimes devices are positioned in the region between the chassis and the wheel in order to deflect incoming debris. One aim of the present invention is to provide an improved arrangement for guarding a vehicle axle against accumulation of material such as waste or earth.

One aspect of the present invention provides a wheeled compactor vehicle having a chassis and at least one wheel mounted on an axle which is rotatable with respect to the chassis, and an axle guard comprising a part cylindrical member fixed to the chassis and overlapping an edge region of the wheel.

Preferably, the axle guard is removably mounted on the vehicle chassis such that on the less frequent occasions when the axle needs to be cleaned, this can be readily carried out.

Preferably the angular extent of the axle guard is greater than 90° and in the preferred embodiment of the present invention. the axle guard extends from at least the uppermost portion of the wheel towards the vehicle rear. This ensures that the axle is adequately protected from debris which might fall on to it from above.

In a typical waste compactor of the type described above. the axle guard is most suited for use with the vehicle front axle where there is no vertical movement between the wheel and the chassis. The axle guard is mounted with the minimum possible clearance between the axle guard and the cylindrical surface of the wheel. In the preferred embodiment of the invention, the clearance between the axle guard and the wheel is no more than one and a half millimetres. This reduces the likelihood of debris passing between the axle guard and the wheel and then becoming entangled with the vehicle axle.

An embodiment of the invention will now be described by way of example only and with reference to the accompanying drawings in which:
Figure 1 is a schematic side elevation of a compactor vehicle according to the present invention;
Figure 2 is a front elevation of the compactor vehicle illustrated in Figure 1 with the front blade removed;
Figure 3 is a partial perspective view showing the relative positions of the chassis, the wheel and the axle guard;
Figure 4 is a side elevation of the axle guard; and
Figure 5 is a cross section through the axle guard taken on the line A-A in Figure 4.

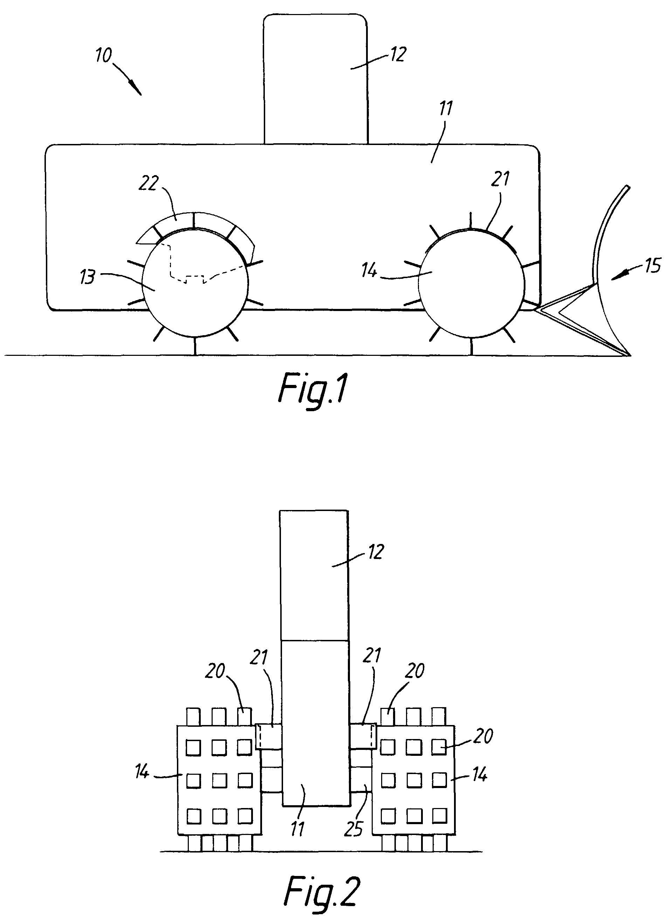

Figure 1 illustrates a compactor vehicle 10 having a chassis 11, cab 12 and four wheels, namely front wheels 14 and rear wheels 13. The vehicle has a front blade assembly 15 of the usual type which will not be discussed further herein. The wheels have teeth 20 which are illustrated more clearly in the remaining figures. The teeth are positioned around the cylindrical surfaces of the wheels. The front wheels 14 each have an axle guard 21 to be described in more detail below. The rear wheels 13 each have an axle guard 22 which is described in more detail in our copending patent application.

The front wheels are mounted on axle 25. Axle 25 is rotatably mounted on the chassis so as to be rotatable about its axis. It has no other freedom of movement with respect to the chassis.

Each wheel 14 has an associated part cylindrical axle guard 21 which is coaxial with the axle 25 and the wheels 14. As illustrated in Figure 1, the axle guard 21 has an angular extent of about 120°. Figure 1 shows the guard mounted symmetrically with respect to vertical. Alternatively it can be rotated slightly towards the rear. It is preferable that the guard covers at least the uppermost portion of the wheel.

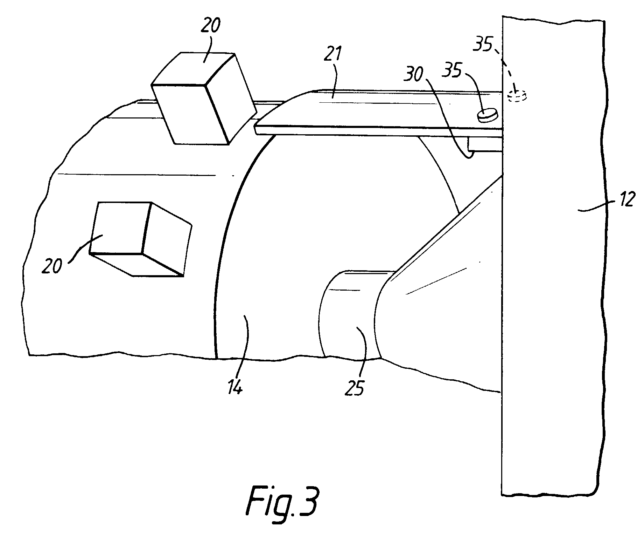

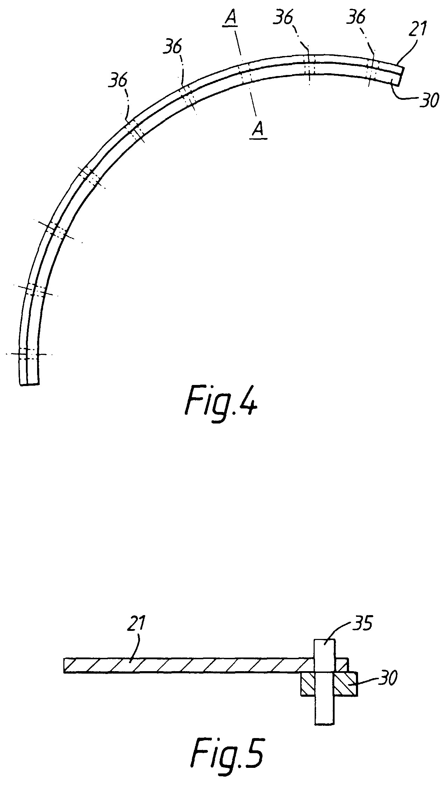

As shown in Figures 2 and 3, each axle guard slightly overlaps its associated wheel. In order to achieve this with a standard waste compactor vehicle, it has been necessary to slightly move the teeth 20 outwardly from the vehicle. A suitable overlap is about 40 mm. Each axle guard is mounted on a semi-circular horizontally extending flange 30 which may be welded to the vehicle chassis 12. Each guard 21 is then bolted to its associated flange 30 by means of bolt 35. Figure 4 shows an axle guard 21 having nine equally spaced bolt locations 36.

Since the front wheels 14 are only able to rotate with respect to the chassis 11, the guards 21 can be made to closely follow the contours of the wheels and the clearance between the guards and the wheels can be minimized. In the preferred embodiment of the invention, the gap between the vehicle wheels and the axle guards is no more than 25 mm, preferably less than 5 mm and ideally less than 1.5 mm.

## Claims

1. A wheeled compactor vehicle having a chassis and at least one wheel mounted on an axle which is rotatable with respect to the chassis. and an axle guard comprising a part cylindrical member fixed to the chassis and overlapping an edge region of the wheel.

2. A vehicle as claimed in claim 1 in which the axle guard is removably mounted on the chassis.

3. A vehicle as claimed in claim 1 or 2 in which the angular extent of the axle guard is greater than 90°.

4. A vehicle as claimed in claim 1, 2 or 3 in which the axle guard extends from at least the uppermost portion of the wheel towards the vehicle rear.

5. A vehicle as claimed in any preceding claim in which the radial clearance between the wheel and the axle guard is no more than 25 mm.

6. A vehicle as claimed in any preceding claim in which the radial clearance between the wheel and the axle guard is no more than 5 mm.

7. A vehicle as claimed in any preceding claim in which the radial clearance between the wheel and the axle guard is no more than 1.5 mm.

8. A vehicle as claimed in any preceding claim in which the wheel has protruding elements and the axle guard overlaps an edge region of the wheel having no protruding elements.

9. A vehicle substantially as hereinbefore described with reference to the accompanying drawings.
